# EUROPEAN PATENT APPLICATION

(11) **EP 4 538 105 A1**
(43) Date of publication of application: **16.04.2025**
(21) Application number: 23202982.7
(22) Date of filing: 11.10.2023
(51) Int. Cl.: B60L 53/18, B60L 53/30

(54) **ELECTRIC VEHICLE CHARGING COMPONENT WITH AEROGEL ISOLATOR**

(71) Applicant: ABB E-mobility B.V., 2629 JG Delft (NL)
(72) Inventor: BECH, Lars, 3119 JA Schiedam (NL)
(74) Representative: Zimmermann & Partner Patentanwälte mbB

(57) **Abstract**

An electric vehicle charging component (10, 20, 30, 40) for an electric vehicle charging infrastructure (100), comprising:
a charging current carrying component (13b, 14b), configured to provide electric charging current to an electric vehicle (60) to be charged;
a housing (13a), configured to enclose the charging current carrying component (13a); and
a thermal isolator (A), disposed between the charging current carrying component (13b, 14b) and the housing (13a);
characterized in that the thermal isolator (A) comprises an aerogel.

## Description

### Field of the invention

The present disclosure relates to an electric vehicle charging component for an electric vehicle charging infrastructure as well as an electric vehicle charging infrastructure.

Electric vehicle charging infrastructures become more and more complex and more and more powerful in view of their charging power. This increases the requirements for the technical properties of the electric vehicle charging components of the electric vehicle charging infrastructure.

Consequently, there is the need for electric vehicle charging components in an electric vehicle charging infrastructure with improved properties, in particular in high power applications.

### Summary

The present invention is defined by the subject-matter of the independent claims. Additional features of the invention are presented in the dependent claims.

According to an aspect of the invention, an electric vehicle charging component for an electric vehicle charging infrastructure comprises the following: A charging current carrying component, configured to provide electric charging current to an electric vehicle to be charged. A housing, configured to enclose the charging current carrying component. A thermal isolator, disposed between the charging current carrying component and the housing. The thermal isolator comprises an aerogel.

Aerogel is a synthetic porous ultralight material. From a gel, the liquid component for the gel is replaced with a gas, without significant collapse of the gel structure. The result is a solid with relatively low density and relatively low thermal conductivity. Preferably the aerogel is made of silica or polymer.

Preferably, the thermal isolator is completely made of an aerogel.

Using aerogel as the thermal isolator allows to reduce temperature leakage between the charging carrying component and the housing. Furthermore, using aerogel as the thermal isolator allows to reduce temperature leakage between different electric vehicle charging components of the electric vehicle charging infrastructure. Furthermore, using aerogel as the thermal isolator allows for an improved touch experience of the user, touching the electric charging component, in particular an electric charging connector or an electric charging cable. In addition, using aerogel as the thermal isolator allows using more extreme cooling methods of the electric charging components and/or using higher charging powers.

The term "electric vehicle charging infrastructure", as used herein, relates to an infrastructure that provides electrical charging services to electric vehicles. In other words, the electric vehicle charging infrastructure provides a direct current charging to electric vehicles from at least one power source.

Thus, an electric vehicle charging component in an electric vehicle charging infrastructure with improved properties, in particular in high power applications, is provided.

In a preferred embodiment, the electric charging component supports at least 200 kilo watt, preferably at least one mega watt, of charging power.

With higher charging power, higher unwanted power dissipation of the electric vehicle charging components occur. At a charging power of 200 kilo watt or higher, common isolators like rubber or plastic become unsuitable for the application in an electric vehicle charging infrastructure, in particular due to a thickness or a weight of the isolator that is necessary to provide the needed thermal isolation. The aerogel allows, compared to known isolators, to reduce the amount of isolator material used to provide a similar thermal isolation, leading to a reduced weight of the electric vehicle charging component. Furthermore, the aerogel allows charging applications with higher charging power.

Thus, an electric vehicle charging component in an electric vehicle charging infrastructure with improved properties, in particular in high power applications, is provided.

In a preferred embodiment, the electric charging component comprises one of the following: An electric charging station that is configured to provide the electric charging current. An electric battery storage, configured to store and provide the electric charging current. A photovoltaic system, configured to provide the electric charging current. An electric direct current/direct current, DC/DC, grid, configured to electrically connect the vehicle charging component with other vehicle charging components.

The term "electric DC/DC grid" is also referred to as "electric DC/DC power grid".

In a preferred embodiment, the electric charging station comprises at least one charging station base component, configured to provide the electric charging current to the electric vehicle, at least one electric charging connector, configured to electrically connect the electric charging station to the electric vehicle, and at least one electric charging cable, configured to electrically connect the at least one charging station base component with the at least one electric charging connector.

In a preferred embodiment, the electric charging station is configured to receive the electric charging current from at least one of the following: The electric battery storage, configured to store and provide the electric charging current. The photovoltaic system, configured to provide the electric charging current. An electric alternating current/direct current, AC/DC, grid.

The term "electric AC/DC grid" is also referred to as "electric AC/DC power grid".

In a preferred embodiment, the charging current carrying component comprises a charging current carrying bus bar. The thermal isolator, disposed between the charging current carrying component and the housing is formed as a solid aerogel structure.

Charging current carrying bus bars are preferably used in bus bar connectors between an electric AC/DC grid and an electric charging station. Further preferably, charging current carrying bus bars are used within the electric charging station.

Solid aerogel structures provide a better isolation compared to aerogel blankets, but do not provide flexibility. Thus, their application is limited to non flexible components like charging current carrying bus bars.

In a preferred embodiment, the charging current carrying component comprises a current carrying wire. The thermal isolator, disposed between the charging current carrying component and the housing is formed as a flexible aerogel blanket.

The aerogel blanket allows to be used for flexible charging current carrying components like charging current carrying wires. Preferably, the charging current carrying wires are included in the electric DC/DC grid and/or the electric charging cable and/or the electric charging connector.

Thus, an at least partially flexible electric vehicle charging component in an electric vehicle charging infrastructure with improved properties, in particular in high power applications, is provided.

In a preferred embodiment, the flexible aerogel blanket has a thickness of five centimeter or lower, in particular one centimetre or lower.

Due to the relatively good thermal properties of the aerogel, similar isolation properties compared to rubber or plastic isolators can be achieved with a reduced thickness of the isolator.

Thus, a more flexible electric vehicle charging component in an electric vehicle charging infrastructure can be provided with similar isolation properties than rubber or plastic isolators.

In a preferred embodiment, the electric charging current is a direct current.

In a preferred embodiment, wherein the charging current carrying component comprises copper and/or aluminum.

Preferably, the charging current carrying component comprises a copper alloy and/or an aluminum alloy.

In a preferred embodiment, the aerogel is configured to create a thermal compartment section within the electric vehicle charging component.

The thermal compartment relates to a section that is thermally isolated from the surrounding sections. In other words, sections that have relatively high power dissipation and as such are relatively hot, for example a bus bar connector between an electric AC/DC grid and an electric charging station, can be thermally isolated by the aerogel with reduced heat leakage. Thus allows a service temperature of the subsequent electric vehicle charging components like electric charging cable or electric charging connector that the customer might hold in their hand to be reduced.

The same applies the other way around for sections that are relatively cold, like sections that are artificially cooled down.

This reduces the thermal leakage between sections of the electric vehicle charging component or between electric vehicle charging components. In other words, very hot/cold temperatures inside the housing of the electric vehicle charging component still allow having surface temperatures of the electric vehicle charging component with human touchable temperatures.

Thus, an electric vehicle charging component in an electric vehicle charging infrastructure with improved properties, in particular in high power applications, is provided.

In a preferred embodiment, the electric vehicle charging component comprises a liquid nitrogen cooling layer, configured to cool the current carrying component.

Preferably, the liquid nitrogen cooling layer is disposed in thermally isolated thermal compartment section. Thus, the customer can hold an electric vehicle charging component, like the electric charging cable or the electric charging connecter, even when the current charging carrying component inside the housing is significantly cooled down.

According to another aspect of the invention, an electric vehicle charging infrastructure comprises at least one electric vehicle charging component. The at least one electric vehicle charging component comprises a charging current carrying component, configured to provide electric charging current to an electric vehicle to be charged, a housing, configured to enclose the charging current carrying component, and a thermal isolator, disposed between the charging current carrying component and the housing. The thermal isolator comprises an aerogel.

In a preferred embodiment, the electric charging component comprises one of the following: An electric charging station that is configured to provide the electric charging current. An electric battery storage, configured to store and provide the electric charging current. A photovoltaic system, configured to provide the electric charging current. An electric direct current/direct current, DC/DC, grid, configured to electrically connect the vehicle charging component with other vehicle charging components.

In a preferred embodiment, the electric charging station comprises at least one charging station base component, configured to provide the electric charging current to the electric vehicle, at least one electric charging connector, configured to electrically connect the electric charging station to the electric vehicle, and at least one electric charging cable, configured to electrically connect the at least one charging station base component with the at least one electric charging connector.

The subject matter of the invention will be explained in more detail in the following text with reference to preferred exemplary embodiments which are illustrated in the attached drawings, in which:

### Brief description of the drawings

Exemplary embodiments of the invention will be described in the following with reference to the accompanying drawings:
Fig. 1 illustrates a schematic view of an isolated electric charging cable;
Fig.2 illustrates a schematic view of an isolated bus bar;
Fig. 3 schematically shows an electric vehicle charging infrastructure, EVCI, comprising a plurality of electric vehicle charging components.

Fig .1 shows an electric charging cable 13 as an example for an electric vehicle charging component of an EVCI. The electric charging cable 13 comprises a charging current carrying component 13b in form of a wire, configured to provide electric charging current to an electric vehicle 60 to be charged, a housing 13a, configured to enclose the charging current carrying component 13a and a thermal isolator A, disposed between the charging current carrying component 13b and the housing 13a. The thermal isolator A comprises an aerogel. Due to the thermal isolator A comprising an aerogel, the thickness of the thermal isolator A can be reduced allowing for improved flexibility and reduced weight of the electric charging cable 13 without reducing the thermal isolation properties. The aerogel also provides improved thermal isolation properties. The aerogel in this case is provided in form of an aerogel blanket to provide the needed flexibility.

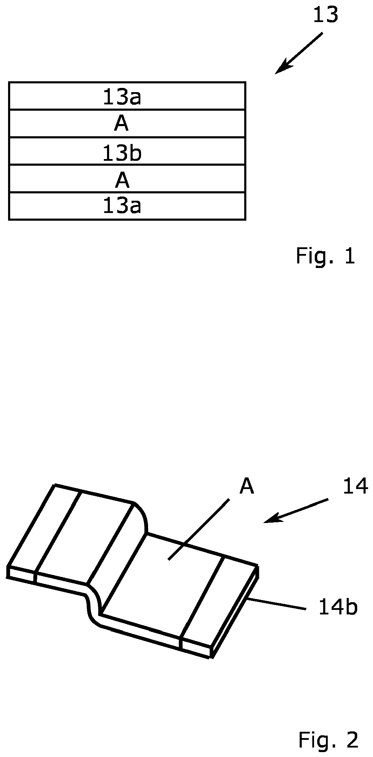

Fig. 2 illustrates a schematic view of an isolated bus bar 14. The Bus bar 14 is part of an electric vehicle charging component of an EVCI. The bus bar 14 is thermally isolated by a thermal isolator A disposed between the charging current carrying component 14b and a housing (not shown). The thermal isolator A comprises an aerogel. Due to the thermal isolator A comprising an aerogel, the thickness of the thermal isolator A can be reduced allowing for improved reduced weight and improved thermal isolation of the bus bar without reducing the thermal isolation properties. The aerogel in this case is provided in form of a solid aerogel structure as no flexibility of the thermal isolator A is needed due to the non-flexibility of the bus bar.

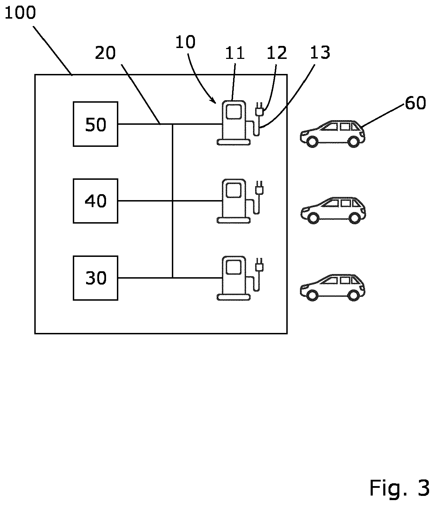

Fig. 3 schematically shows an electric vehicle charging infrastructure, EVCI, 100, comprising a plurality of electric vehicle charging components 10, 20, 30, 40. As the electric charging components 10, 20, 30, 40, the EVCI 100 comprises a plurality (in this case three) electric charging stations 10 that is configured to provide electric charging current to electric vehicles 60, an electric battery storage 30, configured to store and provide the electric charging current, a photovoltaic system 40, configured to provide the electric charging current and an electric direct current/direct current, DC/DC, grid 20, configured to electrically connect the vehicle charging component 10, 20, 30, 40 with other vehicle charging components 10, 20, 30, 40. In other words, the DC/DC grid 20 comprises a charging current carrying wire connecting power sources to the electric charging stations 10. The power sources comprises the electric battery storage 30, the photovoltaic system 40 and an electric alternating current/direct current, AC/DC, grid 50. Each electric charging station 10 comprises a charging station base component 11, configured to provide the electric charging current to the electric vehicle 60, an electric charging connector 12, configured to electrically connect the electric charging station 10 to the electric vehicle 60, and an electric charging cable 13, configured to electrically connect the charging station base component 11 with the electric charging connector 12. Thus, it becomes apparent that from the power sources to the electric vehicle 60, the electric charging current has to be transferred through a plurality of electric charging components 10, 20, 30, 40, wherein in each of the electric charging components 10, 20, 30, 40 a thermal isolator A is used to reduce thermal leakage. In line with the above description, the thermal isolator A comprising an aerogel allows to reduce thermal leakage from each of the electric charging components 10, 20, 30 40 and from each connection between electric charging components 10, 20, 30, 40. In addition to the improved thermal isolation properties of the aerogel, the aerogel also provides improved flexibility compared to known thermal isolators made from rubber or plastics, which allows improved flexibility in particular in the thermal isolation of the electric DC/DC grid 20, the electric charging connector 12 and the electric charging cable 13.

Thus, an electric vehicle charging component 10, 20, 30, 40 in an electric vehicle charging infrastructure 100 with improved properties, in particular in high power applications, is provided.

### List of references

- 10: electric charging station
- 11: charging station base component
- 12: electric charging connector
- 13: electric charging cable
- 13a: housing
- 13b: charging current carrying component
- 14: bus bar
- 14b: charging current carrying component
- 20: electric DC/DC grid
- 30: electric battery storage
- 40: photovoltaic system
- 50: electric AC/DC grid
- 60: electric vehicle
- A: thermal isolator
- 100: electric vehicle charging infrastructure

## Claims

1. An electric vehicle charging component (10, 20, 30, 40) for an electric vehicle charging infrastructure (100), comprising:
a charging current carrying component (13b, 14b), configured to provide electric charging current to an electric vehicle (60) to be charged;
a housing (13a), configured to enclose the charging current carrying component (13a); and
a thermal isolator (A), disposed between the charging current carrying component (13b, 14b) and the housing (13a);
**characterized in that** the thermal isolator (A) comprises an aerogel.

2. The electric vehicle charging component of any one of the preceding claims,
wherein the electric charging component (10, 20, 30, 40) supports at least 200 kilo watt of charging power.

3. The electric vehicle charging component of claims 1 or 2,
wherein the electric charging component (10, 20, 30, 40) comprises one of:
• an electric charging station (10) that is configured to provide the electric charging current;
• an electric battery storage (30), configured to store and provide the electric charging current;
• a photovoltaic system (40), configured to provide the electric charging current;
• an electric direct current/direct current, DC/DC, grid (20), configured to electrically connect the vehicle charging component (10, 20, 30, 40) with other vehicle charging components (10, 20, 30, 40).

4. The electric vehicle charging component of claim 3,
wherein the electric charging station (10) comprises at least one charging station base component (11), configured to provide the electric charging current to the electric vehicle (60), at least one electric charging connector (12), configured to electrically connect the electric charging station (10) to the electric vehicle (60), and at least one electric charging cable (13), configured to electrically connect the at least one charging station base component (11) with the at least one electric charging connector (12).

5. The electric vehicle charging component of claim 4,
wherein the electric charging station (10) is configured to receive the electric charging current from at least one of
• the electric battery storage (30), configured to store and provide the electric charging current;
• the photovoltaic system (40), configured to provide the electric charging current; and
• an electric alternating current/direct current, AC/DC, grid (50).

6. The electric vehicle charging component of any one of the preceding claims,
wherein the charging current carrying component (13b, 14b) comprises a charging current carrying bus bar (14),
wherein the thermal isolator (A), disposed between the charging current carrying component (14b) and the housing is formed as a solid aerogel structure.

7. The electric vehicle charging component of any one of the preceding claims,
wherein the charging current carrying component (13b, 14b) comprises a charging current carrying wire (13b),
wherein the thermal isolator (A), disposed between the charging current carrying component (13b) and the housing (13a) is formed as a flexible aerogel blanket.

8. The electric vehicle charging component of claim 7,
wherein the flexible aerogel blanket has a thickness of five centimeter or lower.

9. The electric vehicle charging component of any one of the preceding claims,
wherein the electric charging current is a direct current.

10. The electric vehicle charging component of any one of the preceding claims,
wherein the charging current carrying component (13b, 14b) comprises copper and/or aluminum.

11. The electric vehicle charging component of any one of the preceding claims,
wherein the aerogel is configured to create a thermal compartment section within the electric vehicle charging component (10, 20, 30, 40).

12. The electric vehicle charging component of any one of the preceding claims, comprising:
a liquid nitrogen cooling layer, configured to cool the current carrying component (13b, 14b).

13. An electric vehicle charging infrastructure (100) comprising at least one electric vehicle charging component (10, 20, 30, 40);
wherein the at least one electric vehicle charging component (10, 20, 30, 40) comprises:
a charging current carrying component (13b, 14b), configured to provide electric charging current to an electric vehicle (60) to be charged;
a housing (13a), configured to enclose the charging current carrying component (13b, 14b); and
a thermal isolator (A), disposed between the charging current carrying component (13b, 14b) and the housing (13a);
**characterized in that** the thermal isolator (A) comprises an aerogel.

14. The electric vehicle charging infrastructure of claim 13,
wherein the electric charging component comprises (10, 20, 30, 40) one of:
• an electric charging station (10) that is configured to provide the electric charging current;
• an electric battery storage (30), configured to store and provide the electric charging current;
• a photovoltaic system (40), configured to provide the electric charging current;
• an electric direct current/direct current, DC/DC, grid (20), configured to electrically connect the vehicle charging component with other vehicle charging components.

15. The electric vehicle charging infrastructure of claim 14,
wherein the electric charging station (10) comprises at least one charging station base component (11), configured to provide the electric charging current to the electric vehicle (60), at least one electric charging connector (12), configured to electrically connect the electric charging station (10) to the electric vehicle (60), and at least one electric charging cable (13), configured to electrically connect the at least one charging station base component (11) with the at least one electric charging connector (12).
